(19) Europäisches Patentamt
European Patent Office
Office européen des brevets

(11) Publication number: 0 055 632 B1

(12) # EUROPEAN PATENT SPECIFICATION

(45) Date of publication of patent specification: 11.09.85

(51) Int. Cl.[4]: C 08 G 59/14

(21) Application number: 81306181.9

(22) Date of filing: 30.12.81

(54) **Modified epoxy resin composition and process for the preparation thereof.**

(30) Priority: 29.12.80 JP 185573/80
06.01.81 JP 159655/81

(43) Date of publication of application:
07.07.82 Bulletin 82/27

(45) Publication of the grant of the patent:
11.09.85 Bulletin 85/37

(84) Designated Contracting States:
AT DE FR GB IT NL

(56) References cited:
DE-A-3 000 911
Patent Abstracts of Japan Vol. 5, No. 8, 20 January 1981
Chemical Abstracts vol. 92, no. 22 2 June 1980 Columbus, Ohio, USA H. NAKADA et al. "Cationic polymer electrophoretic coating materials" page 74, column 1, abstract no. 182638u

The file contains technical information submitted after the application was filed and not included in this specification

(73) Proprietor: SUMITOMO CHEMICAL COMPANY, LIMITED
15 Kitahama 5-chome Higashi-ku
Osaka-shi Osaka 541 (JP)

(72) Inventor: Hino, Minoru
No. 24-2 Akaooji-cho
Takatsuki-shi Osaka-fu (JP)
Inventor: Oshima, Takao
No. 20-13 Gotengahama
Otsu-shi Shiga-ken (JP)
Inventor: Tachiibana, Akihiro
No. 29-1, Maruyama 2-Chome
Funabashi-shi Chiba-ken (JP)

(74) Representative: Allard, Susan Joyce et al
BOULT, WADE & TENNANT 27 Furnival street
London EC4A 1PQ (GB)

(56) References cited:
Chemical Abstracts vol. 92, no. 22 2 June 1980 Columbus, Ohio, USA H. NAKADA et al. "Cationic polymer electrophoretic coating materials" page 74, column 2, abstract no. 182639v

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 055 632 B1

**Description**

The present invention relates to a modified epoxy resin composition and to a process for modifying an epoxy resin in order to provide it with other properties without making the original properties thereof inferior.

Epoxy resins usually have excellent properties, such as excellent mechanical strength, adhesion, heat resistance and chemical resistance, and hence, they are widely used for making coating compositions, electrical insulators, materials for civil engineering and construction, adhesives and composite materials. However, the cured epoxy resin products usually possess an inferior flexibility, and hence, attempts have been made to improve the fragility thereof and to give them excellent impact resistance and thermal shock resistance. For example, it has been proposed to modify the epoxy resin by adding thereto a modifying agent such as a polysulfide, polychloroprene, polybutadiene, dimeric acid, polyester ether or polyamide, but such methods have some disadvantages that result in a deterioration of the original properties of epoxy resin such as mechanical strength, electric properties, heat resistance, solvent resistance, corrosion resistance, and furthermore that the most suitable method must be individually selected in accordance with the intended utilities. When employing the resin for making coating compositions, the epoxy resin should have impact resistance and an adhesion to the substrate as well as solvent resistance, and corrosion resistance. Furthermore, other properties are required such as compatibility of the epoxy resin with the modifying agent, homogeneity, film-forming properties of the vehicle resin and crosslinking curing properties. Such requirements have never been satisfied by the known techniques.

Recently, epoxy resins have been used as materials for cathode electrocoating composition suitable for coating automobiles, and for this use various methods have been proposed for improving the properties of the epoxy resins, in order to give coating compositions having excellent chip resistance, corrosion resistance, etc. Among these, it has been proposed to use as a flexibilizer a liquid polybutadiene which has been used for the preparation of anode electrocoating compositions. However, the liquid polybutadiene has an insufficient compatibility with the epoxy resin, and even if it is chemically bonded to the epoxy resin by means of an appropriate reactive group, it is still difficult to obtain a good composition which can give a clear uniform coating layer. In order to eliminate such a drawback, particularly to improve the compatibility of the flexibilizer with the epoxy resin, various methods have been proposed. For example, it is disclosed in Japanese Patent Publication (unexamined) No. 97632/1979 that a base resin for a cationic electrocoating composition is obtained by reacting a butadiene-acrylonitrile copolymer containing carboxyl groups at both ends thereof with an epoxy resin. According to this method, the compatibility with the epoxy resin is much improved owing to the acrylonitrile group, but it still has insufficient film-forming properties and flexibility. Moreover, since this copolymer is a comparatively high molecular weight functional polymer, use thereof is restricted. For example, it is necessary to specify the ratio of the copolymer to the epoxy resin in order to give the desired homogeneity of the electrocoating composition or to regulate the concentration of a cationic group in order to give the desired electrophoresis. This method is also disadvantageous in view of the high cost.

Another approach for improving the flexibility by using a liquid polybutadiene is disclosed in Japanese Patent Publication (unexamined) No. 5933/1980, wherein a reaction product of an epoxy resin with a conjugated diene polymer containing a carboxyl group at the end or intermediate of the molecule is used as a base resin for a cationic electrocoating composition. The liquid polybutadiene used in this method is substantially a liquid polybutadiene having a high 1,2-vinyl structure and having carboxyl groups at both ends thereof, and the liquid polybutadiene is used for improving smoothness and curing properties of the coating film. These liquid polybutadienes having a high 1,2-vinyl structure or consisting mainly of butadiene skeleton are still inferior in their compatibility with the epoxy resins.

Another method is proposed in Japanese Patent Publication (unexamined) No. 5932/1980 which discloses a resin composition suitable for a cathode precipitating type electrocoating which comprises predominantly a reaction product of a basic resin and an amine-modified epoxy resin, wherein the basic resin is obtained by reacting an anhydrous maleic acid adduct of a liquid polybutadiene or a natural drying oil with a diamine containing a tertiary amino group within the molecule (e.g. N,N-dimethylaminopropanediamine) and an aminoalcohol (e.g. monoethanolamine) or a diamine containing a hydroxy group (e.g. 2-(N,N-dihydroxymethylamino)ethylamine), by which the liquid polybutadiene or natural drying oil is bonded to a tertiary amino group and hydroxy group via an imidohydrocarbon bond. Since the basic resin used in this method contains a large amount of an aliphatic tertiary amino group having a comparatively strong basicity and having a polymerization catalyst activity to the epoxy group, when the basic resin is reacted with the epoxy resin in a system containing an excess amount of epoxy groups, a polymerization reaction due to ring-opening of the epoxy groups occurs and the esterification reaction between the carboxyl group of the basic resin and the epoxy group of the epoxy resin proceeds insufficiently, which unfavorably results in gelation of the system. Accordingly, in the method of Japanese Patent Publication (unexamined) No. 5932/1980, the amination of the epoxy resin is carried out while preventing the above-mentioned undesirable side reaction by carrying out the reaction in the presence of an equimolar amount of an amine to the excess epoxy groups, or by charging the basic resin into the system after a part of the amination reaction has taken place.

DE—A—3,000,911 describes electrocoating compositions comprising the reaction product of an epoxy

resin (E) with a modified adduct (D) of a conjugated diene polymer-copolymer (A) with an α,β-unsaturated dicarboxylic acid or anhydride thereof and a capped polyisocyanate. However, the modified adduct (D) used in DE—A—3,000,911 contains a fixed amount of —COOH groups, and hence, when the epoxy resin is modified with such a modified adduct (D), the degree of modification of the properties of the epoxy resin is limited because the amount of the adduct (D) to be added is limited because of the occurrence of undesirable cross-linking.

It has been required to give a flexibility to the epoxy resins not only in the field of cationic electrocoating but also in other coating fields and in the production of various molding compositions.

We have now developed an improved modified epoxy resin which can give a cured product having excellent flexibility and which has an excellent compatibility with other epoxy resins and an improved process for modifying epoxy resins in order to give them various properties without making the original properties thereof inferior.

Accordingly, the improved epoxy resin of the present invention is obtained by treating an epoxy resin with at least one modified adduct (D) of a conjugated diene polymer or copolymer which has an amido bond and/or amido bond and a semister structure and has an acid value owing to a free carbonyl group of 5 to 100, preferably 10 to 50, the modified adduct being obtained by reacting an adduct [A] of a polymer of a conjugated diene having a number average molecular weight of 300 to 20,000, preferably 500 to 5,000, or a copolymer of the conjugated diene and a vinyl monomer or acetylene with an α,β-unsaturated dicarboxylic acid or its anhydride, with a compound [B] containing one primary amino group in the molecule and a compound [C] containing a hydroxy group in the molecule wherein the compound [B] and the compound [C] are used in an amount of 5 to 95% by mole and 95 to 5% by mole, respectively, to 1 mole of the α,β-dicarboxylic acid or its anhydride, and the reaction between the epoxy resin and the modified adduct [D] being carried out under an inert gas at a temperature of 50 to 250°C for a period of time of from 30 minutes to 10 hours.

The modified epoxy resin of the present invention is characteristic in that it has a good compatibility with conventional epoxy resins, such as epi-bis type epoxy resins derived from bisphenol A and epichlorohydrin, polyglycidyl ether type epoxy resins derived from a novalac resin, polyglycidyl amine type epoxy resins derived from an aromatic amine, and polyglycidyl ester type epoxy resins derived from an aromatic polycarboxylic acid, and that when it is used in coating compositions and molding compositions, it can give cured products excellent flexibility, such as excellent impact resistance and thermal shock resistance.

The present invention is also characteristic in that the most suitable micro structure or molecular weight of the conjugated diene polymer or copolymer can freely be selected in accordance with the requirements and utilities of the final products. For example, when a liquid polybutadiene being rich in cis-1,4-bonds is used as the base of the modified adduct, a comparatively small amount of the modified adduct can give the desired flexibility to the epoxy resin. When an adduct having a high 1,2-vinyl structure is used a hard composition can be obtained. Futhermore, by controlling the amount of the α,β-unsaturated dicarboxylic acid or its anhydride (e.g. maleic anhydride) introduced into the liquid polybutadiene, or by controlling the modifying conditions, the dicarboxylic acid or its anhydride can react with the liquid polybutadiene in an amount equimolar or nearly equimolar to the epoxy resin (as calculated as a monomer).

The conjugated diene polymer used in the present invention has a number average of from 300 to 20,000, preferably 500 to 5,000. The conjugated diene polymer includes homopolymers of a conjugated diene monomer and also copolymers thereof with other copolymerizable monomers. The micro structure of the double bond thereof is not important, but the polymer contain an optional ratio of 1,4-bonds, 1,2-bonds or 3,4-bonds.

Suitable examples of the conjugated diene monomer are butadiene, isoprene, chloroprene and 1,3-pentadiene. Suitable examples of other copolymerizable monomers are acetylene on vinyl monomers such as acrylic acid esters (e.g. methyl acrylate, ethyl acrylate, etc.), methacrylic acid esters (e.g. methyl methacrylate, ethyl methacrylate, etc.), acrylonitrile, styrene, ethylene or propylene which may be used alone or in combination of two or more thereof. The conjugated diene copolymer preferably contains 50% by mole or more of the conjugated diene monomer, preferably butadiene or isoprene. The conjugated diene polymer and copolymer may also contain carboxyl and/or hydroxyl groups.

The α,β-unsaturated dicarboxylic acid or its anhydride includes maleic anhydride, maleic acid, fumaric acid, itaconic acid and citraconic acid, amongst which maleic anhydride is particularly suitable. In accordance with variations of the micro structure and molecular weights of the conjugated diene polymer or copolymer, the types of the copolymerizable monomers and also the desired utilities of the final products, themost suitable amount of the α,β-unsaturated dicarboxylic acid or its anhydride and also the most suitable type and amount of the compounds [B] and [C] are carefully selected.

The compound [B] containing one primary amino group in the molecule includes a compound containing a primary amino group and an aromatic residue in the molecule which has the following formula :

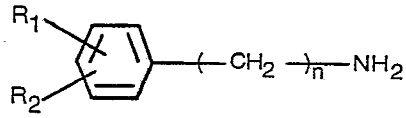 (I)

wherein $R_1$ and $R_2$ are the same or different and are each hydrogen, an alkyl group having 1 to 5 carbon atoms, halogen, cyano, hydroxy, thiol, methoxy, $-CONH_2$, $-COCH_3$, $-COOCH_3$, or $-N(CH_3)_2$, and n is 0 or an integer of from 1 to 3, or a compound containing a primary amino group and an aliphatic or alicyclic hydrocarbon group in the molecule which has the following formula:

$$R_3{-}NH_2 \qquad [II]$$

wherein $R_3$ is an aliphatic hydrocarbon group having 1 to 18 carbon atoms or an alicyclic hydrocarbon group having 3 to 18 carbon atoms, the aliphatic and alicyclic hydrocarbon groups containing optionally an ether bond.

Suitable examples of the compound of the formula [I] are aniline, toluidine, xylidine, aminophenol, aminocresol, aminoresorcinol, ethylaniline, cumidine, p-tert-butylaniline, p-tert-amylaniline, benzylamine, phenethylamine, anisidine, aminophenetol, vinylaniline, chloroaniline, dichloroaniline, aminothiophenol, aminobenzonitrile, aminobenzamide, aminoacetophenone, methyl aminobenzoate, aminoethylphenol and N,N-dimethylphenylenediamine.

Suitable examples of the compound of the formula [II] are saturated aliphatic amines such as methylamine, ethylamine, n-propylamine, isopropylamine, n-butylamine, isobutylamine, sec-butylamine, tert-butylamine, n-amylamine, isoamylamine, tert-amylamine, 1,2-dimethylpropylamine, hexylamine, heptylamine, octylamine, 2-ethylhexylamine, nonylamine, decylamine, laurylamine, tetradecylamine, hexadecylamine, or octadecylamine; unsaturated aliphatic amines such as vinylamine, allylamine, methallylamine, 1-amino-4-pentene, propargylamine, 3-amino-3-methyl-1-butyne, or oleylamine; amines containing an ether group such as 2-aminoethyl ethyl ether, 3-methoxypropylamine, 3-ethoxypropylamine, propoxypropylamine, isopropoxypropylamine, butoxypropylamine, isobutoxypropylamine, 2-ethylhexyloxypropylamine, decyloxypropylamine, lauryloxypropylamine, myristyloxypropylamine, or furfurylamine; alicyclic amines such as cyclopropylamine, cyclopropylmethylamine, cyclobutylamine, cyclopentylamine, cyclohexylamine, cycloheptylamine, or alkyl-substituted derivatives thereof.

The compounds [I] and [II] may be used as single compounds, or as a mixture of two or more thereof.

The compound [C] containing a hydroxy group in the molecule includes a compound for the formula:

$$R_4{-}(CH_2)_m{-}OH \qquad [III]$$

wherein $R_4$ is a saturated or unsaturated hydrocarbon group having 1 to 18 carbon atoms; a saturated or unsaturated hydrocarbon group having 1 to 12 carbon atoms and containing a cyano group, a halogen atom, in ether bond, an ester bond or a hydroxy group which bonds to a secondary or tertiary carbon; a saturated alcohol residue having 1 to 8 carbon atoms; an acrylic acid residue; or a methacrylic acid residue; and m is 0 or an integer of from 1 to 3.

Suitable examples of the compound of the formula [III] are saturated alcohols such as methanol, ethanol, n-propanol, isopropanol, n-butanol, isobutanol, sec-butanol, tert-butanol, n-amyl alcohol, activated amyl alcohol, isoamyl alcohol, sec-amyl alcohol, 3-pentanol, tert-amyl alcohol, n-hexanol, methylamyl alcohol, 2-ethylbutanol, n-heptanol, 2-heptanol, 3-heptanol; n-octanol, 2-octanol, 2-ethylhexanol, 3,5,5-trimethylhexanol, nonanol, n-decanol, undecanol, n-dodecanol, trimethylnonyl alcohol, tetradecanol, heptadecanol, or octadecanol; unsaturated alcohols such as allyl alcohol, crotyl alcohol, 3-buten-2-ol, propargyl alcohol, or oleyl alcohol; benzyl alcohol, phenethyl alcohol, cinnamyl alcohol, benzyloxyethanol, and their nucleus-substituted derivatives; halogenated alcohols such as ethylene chlorohydrin; ethylene cyanohydrin, furfuryl alcohol, tetrahydrofurfuryl alcohol; glycol monoalkyl ethers such as ethylene glycol monoalkyl ethers, butyl cellosolve, diethylene glycol monoalkyl ethers, triethylene glycol monoalkyl ethers which have 1 to 8 carbon atoms in the alkyl moiety; ethylene oxide adducts such as phenol ethylene oxide adduct, an alkylphenol ethylene oxide adduct, an aliphatic or aromatic monocarboxylic acid ethylene oxide adduct; hydroxyalkyl acrylates or methacrylates such as 2-hydroxyethyl methacrylate, 2-hydroxyethyl acrylate, 3-hydroxypropyl methacrylate, 3-hydroxypropyl acrylate; glycols such as propylene glycol, α-monochloroglycerin, 2-hydroxy-2-methyl-propanol-1; and further glycidol, cyclohexanol, glycerin dichlorohydrin, glycerin di-aliphatic carboxylate, abiethinol. These compounds may be used alone or as a mixture of two or more thereof. Cellosolve is a registered trade mark.

The amount of α,β-unsaturated dicarboxylic acid or its anhydride may vary depending on the molecular weight of the conjugated diene polymer or copolymer to be reacted, but is usually in an amount such that the content of the α,β-unsaturated dicarboxylic acid or its anhydride in the adduct [A] becomes 5 to 50% by weight, preferably 5 to 30% by weight. When the content of α,β-dicarboxylic acid or its anhydride in the adduct [A] is lower than 5% by weight, the modified epoxy resin obtained shows an inferior compatibility with other epoxy resins, and on the other hand, when the content is over 50% by

weight, the modification reaction can hardly be carried out because of the increased viscosity of the reaction system.

The adduct [A] of the conjugated diene polymer or copolymer with the α,β-dicarboxylic acid or its anhydride can be prepared by any conventional method, for example, by mixing a conjugated diene polymer or copolymer and an α,β-dicarboxylic acid or its anhydride (e.g. maleic anhydride) and reacting them under an inert gas at a temperature of 50 to 300°C, preferably 150 to 210°C, for 30 minutes to 10 hours, preferably 2 to 6 hours. In this reaction, an antigelling agent may optionally be added in an amount of 0.01 to 5% by weight, and further an inert organic solvent may be used.

The modified adduct [D] can be prepared by reacting the adduct [A] with an amino compound [B] of the formula [I] or [II] and a compound [C] containing a hydroxy group, wherein the compound [B] and the compound [C] are used in an amount of 5 to 95% by mole and 95 to 5% by mole, respectively, to 1 mole of the α,β-dicarboxylic acid or its anhydride (e.g. maleic anhydride) bonded to the conjugated diene polymer or copolymer. In this reaction, the compound [B] is reacted with the acid or its anhydride group contained in the adduct [A] and is almost all formed into imido bonds, but it may optionally by formed into an amido bond-carboxylic acid skeleton. Besides, the compound [C] is formed into an ester bond-carboxylic acid skeleton.

The modified adduct [D] preferably contains at least 0.5 equivalent weight, preferably 0.75 equivalent weight or more, of a free carboxyl group (as calculated as —COOH number) per one molecule of the conjugated diene polymer or copolymer (as calculated based on the average molecular weight). In this respect, the suitable amounts of the compound [B] and compound [C] are also determined.

The reaction of the adduct [A] with the compounds [B] and [C] may be carried out simultaneously in the same reaction system or in sequence, that is, by reacting firstly the adduct [A] with the compound [B] or [C] (preferably compound [C]) and adding the compound [C] or [B] (preferably compound [B]) to the reaction system preferably after partially carrying out the above reaction, and then completing the reaction of the adduct [A] and the compounds [B] and [C]. Thus, the reaction of the adduct [A] with the compounds [B] and [C] includes the following features.

(1) The adduct [A] is mixed with the compound [B] and the compound [C] and the mixture is simultaneously subjected to the reaction.

(2) The adduct [A] is firstly, preferably partially, reacted with the compound [C], and subsequently the compound [B] is reacted with the resulting reaction mixture.

(3) The adduct [A] is reacted with the compounds [B] and [C] while adding dropwise a mixture of the compounds [B] and [C] to the reaction system.

(4) The adduct [A] is firstly, preferably partially, reacted with the compound [B], and subsequently the compound [C] is reacted with the resulting reaction mixture.

When the adduct [A] is firstly reacted with an equimolar or excess amount of the compound [C], whole or most acid anhydride groups contained in the adduct [A] are ring-opened to give a partially esterified product, and then, the extra partial ester bonds may be converted into imido bonds by reacting the product with the compound [B] of a predetermined amount. In this case, the suitable amount of the compound [B] is determined so that the ratio of the substituents in the final product is within a suitable range.

By the reaction of the adduct [A] and the compound [C], a partially esterified product is obtained. This reaction can be carried out by any conventional method, for example, by reacting the adduct [A] with the compound [C] at a temperature of 30 to 200°C, preferably 30 to 160°C, for 30 minutes to 5 hours, usually in the presence of a slight amount of a catalyst selected from quarternary ammonium salts, tertiary amines, alkali metal salts, or organic acids, wherein an inert solvent such as toluene, xylene, methyl isobutyl ketone or ethylene glycol ethyl ether monoacetate may optionally be used.

The reaction of the adduct [A] and the compound [B] may also be carried out by any conventional method, for example, by reacting the adduct [A] or the partial reaction product of the adduct [A] and the compound [C] with the compound [B] at a temperature of 30 to 250°C, preferably 30 to 200°C, whilst removing the by-produced water. Since this reaction is occasionally accompanied with an exotherm or foaming, the compound (B) is added portion wise to the reaction system, or an appropriate inert solvent as mentioned above is used. In order to obtain partially amidated products, it is preferable to carry out the reaction at a temperature not higher than 100°C.

The finishing point of the above-mentioned reactions may be determined by gas chromatography, IR spectrum, or based upon the amount of the by-produced water, but it is usually determined by measuring an acid value, amine value or saponification value of the reaction system.

Modification of an epoxy resin with the modified adduct [D] thus obtained is carried out by mixing an epoxy resin containing at least one epoxy group, preferably two or more epoxy groups with the modified adduct [D] and reacting the mixture under an inert gas at a temperature of 50 to 250°C, preferably 80 to 200°C, for 30 minutes to 10 hours, wherein appropriate catalyst and solvent as mentioned above may optionally be used. The reaction is usually carried out while checking the acid value of the system in order to determine the finishing point.

The amount of the modified adduct [D] may vary with the requirements and utilities of the final modified epoxy resins, but is usually in the range of 5 to 300 parts by weight, preferably 10 to 100 parts by weight, to 100 parts by weight of the epoxy resin.

The modified epoxy resin obtained by the present invention contains an epoxy group in the molecule,

and hence, can be used like the conventional unmodified epoxy resins and can give a cured product having excellent flexibility and thermal shock resistance whilst maintaining excellent mechanical strength, adhesion, heat resistance, and chemical resistance. Thus, the modified epoxy resin of the present invention can be formed into a resin for cationic electrocoating composition having excellent chip resistance and corrosion resistance by aminating the remaining epoxy groups of the modified epoxy resin and also using isocyanate compounds. Furthermore, the modified epoxy resin of the present invention can be used for the preparation of various coating compositions by incorporating it with a suitable curing agent. Moreover, a liquid resin obtained by modifying an epoxy resin having a low molecular weight by the present invention is suitable as a cast resin having an excellent thermal shock resistance.

The present invention is illustrated by the following Examples, but is not limited thereto.

Example 1

A liquid polybutadiene (number average molecular weight: 1680, viscosity at 20°C: 650 mPa.s iodine value (Wijs method): 445, cis-1,4-structure: 76%, trans-1,4-structure: 23%, and 1,2-vinyl structure: 1%) (340 g), maleic anhydride (60 g) and iron naphthenate (Fe: 5.0%) (0.68 g) are charged into a 500 ml four-necked flask, and the mixture is reacted under nitrogen gas at 190°C for 4 hours to give a maleinated polybutadiene (total acid value: 162).

Into a 500 ml four-necked flask are charged the maleinated polybutadiene obtained above (200 g), toluene (54.0 g), 2-hydroxyethyl methacrylate (13.0 g), phenothiazine (0.8 g) and benzyltrimethylammonium chloride (30 mg), and the mixture is reacted at 90°C for 2 hours. The flask is equipped with a condenser for taking out the by-produced water and a dropping funnel, and thereto is added dropwise a mixture of aniline (18.6 g), phenothiazine (0.5 g) and toluene (44 g) through the dropping funnel. The mixture is reacted with reflux while taking out almost the by-produced water and further the reaction is continued with raising gradually the temperature while distilling off toluene from the system, by which there is obtained a viscous modified adduct (acid value: 23.0, total amine value: 0, remaining toluene: 3% by weight).

The reaction product thus obtained (30 g), and epi-bis type epoxy resin derived from bisphenol A and epichlorohydrin (epoxy equivalent weight: 488) (70 g), ethylene glycol ethyl ether monoacetate (hereinafter, referred to as "EGA") (25 g), phenothiazine (0.25 g) and benzyltrimethylammonium chloride (10 mg) are reacted under nitrogen gas at 150°C for 3 hours, by which the acid value of the reaction system becomes zero (0). The liquid modified epoxy resin has an epoxy equivalent weight of 760 (converted as solid component) (calculated from the remaining epoxy groups thereof).

The modified epoxy resin thus obtained was subjected to the following tests.

The liquid modified epoxy resin (10 g) was mixed well with diaminodiphenylmethane (0.53 g), and the mixture was coated onto a soft steel panel and was cured at 180°C for 20 minutes to give a cured film having excellent clarity and gloss. From the excellent clarity of the cured film, it was confirmed that the polybutadiene component had sufficient compatibility with the epoxy resin.

Besides, a cure film sample (thickness: 30 μm) prepared in the same manner as above shows a pencil hardness of H. When the surface of the sample was crosscut in checkerboard-like lines in squares of 1 mm × 1 mm and then the sample was bent by winding it around a column having a diameter of 4 mm so that the cut surface came outside, no change of the surface was observed. Besides, when a cellophane tape was adhered on the cut surface of the sample and thereafter was peeled off, neither peeling of the film nor relief was observed, by which it was confirmed that the cured film had sufficient flexibility and adhesion.

For comparison purpose, unmodified epi-bis type epoxy resin (epoxy equivalent weight: 488) (10.0 g), diaminodiphenylmethane (1.04 g) and EGA (2.5 g) were mixed well, and the mixture was coated onto a soft steel panel and cured likewise to give a colorless cured film having excellent gloss (thickness: 30 μm). This cured film showed a pencil hardness of H, but when it was crosscut in checkerboard-like lines likewise, the cured film was partially broken and peeled off, and further, by subjecting the cut surface to the bending test and to peeling off test with a cellophane tape, the cured film was wholly peeled off.

Example 2

The same liquid polybutadiene as used in Example 1 (1280 g), maleic anhydride (320 g) and iron naphthenate (Fe: 5.0%) (2.7 g) are charged into a 2 liter four-necked flask, and the mixture is reacted under nitrogen gas at 190°C for 4 hours to give maleinated polybutadiene (total acid value: 218).

Into a 500 ml four-necked flask are charged the maleinated polybutadiene obtained above (250 g), butyl cellosolve® (15.3 g), 2,6-di-tert-butyl-4-methylphenol (hereinafter, referred to as "BHT") (2.5 g), toluene (67.0 g) and benzyldimethylamine (0.16 ml), and the mixture is reacted under nitrogen gas at 120°C for 2 hours, by which the acid value of the reaction system becomes 151. To the reaction mixture is added a solution of cyclohexylamine (35.9 g) in toluene (35.6 g) through a dropping funnel while controlling the raising temperature due to exotherm below 130°C. With giving attention to occurrence of foaming, the temperature of the reaction mixture is gradually raised until the final temperature becomes 180°C, during which the by-produced water and toluene are distilled off. When all materials having low boiling points are removed and the acid value of the reaction product becomes equilibrium at 24.7, the heating is stopped, by which there is obtained a viscous modified adduct (total amine value: 0, remaining toluene: less than 1%).

The modified adduct thus obtained (200 g), an epi-bis type epoxy resin (epoxy equivalent weight: 488)

(300 g), EGA (167 g) and benzyltrimethylammonium chloride (67 mg) are reacted under nitrogen gas at 150°C for 3 hours, by which the acid value of the reaction system becomes almost zero (0). The liquid modified epoxy resin has an epoxy equivalent weight of 953 (converted as solid component) (calculated from the remaining epoxy groups thereof).

When the liquid modified epoxy resin (267 g), EGA (28 g) and diethanolamine (22.0 g) are reacted under nitrogen gas at 80°C for 3 hours, it is confirmed that the epoxy group is reacted. The epoxy resin containing an amino group obtained by the above reaction has a hydroxy group equivalent weight of 220 g/eq.

To the epoxy resin containing amino group obtained above is added dropwise a 70% solution (137 g) of 2-ethylhexanol-semiblocked tolylene diisocyanate (2,4-bond/2,6-bond: 80/20%) in EGA, and the mixture is reacted at 80°C for 2 hours to give a urethane-crosslinked type resin. The liquid resin thus obtained (450 g) is neutralized with acetic acid (8.7 g) with stirring, and thereto is gradually added a deionized water (1440 g) to give a homogeneous electrocoating composition (pH 6.0) (This liquid composition is hereinafter referred to as "A composition").

A pigment paste is prepared as follows.

The A composition obtained above (100 g), titanium oxide (rutile type) (72.9 g) and carbon black (5.9 g) are mixed with a paint conditioner for 30 minutes in order to disperse well the pigments.

To A composition (1790 g) is added with stirring dibutyl tin dilaurate (1.6 g), and thereto is gradually added the pigment paste obtained above (178.8 g) to give a homogeneous cationic electrocoating composition.

Example 3

The maleinated polybutadiene obtained in Example 2 (200 g), allyl alcohol (6.0 g), BHT (1.0 g), toluene (79 g), benzyltrimethylammonium chloride (15 mg) and aniline (27.0 g) are reacted in the same manner as described in Example 1, by which the maleinated polybutadiene is semi-esterified with allyl alcohol and then imidated with aniline, during which the by-produced water and toluene are distilled off. As a result, there is obtained a modified adduct (acid value: 24.9, total amine value: 0, remaining toluene: 3.5% by weight, apparent viscosity at 60°C: 68 Pa.s.

The modified adduct thus obtained (150 g), an epi-bis type epoxy resin (epoxy equivalent weight: 488) (350 g), EGA (167 g) and benzyltrimethylammonium chloride (67 mg) are reacted under nitrogen gas at 150°C for 3 hours, by which the acid value of the reaction system become almost zero (0).

By using the liquid modified epoxy resin thus obtained, a urethane-crosslinked type resin is prepared in the same manner as described in Example 2, and further an electrocoating composition is prepared therefrom likewise.

Example 4

In the same manner as described in Example 2, maleinated polybutadiene and butyl cellosolve® are reacted to give a reaction product (acid value: 151).

The reaction product is subjected to imidation of the remaining acid anhydride groups with p-aminophenol and aniline (1:2 by mole) likewise, during which the by-produced water and the solvent (toluene) are distilled off, by which there is obtained a viscous modified adduct (acid value: 24.8).

The modified adduct thus obtained (175 g) and an epi-bis type epoxy resin (epoxy equivalent weight: 488) (325 g) are reacted in EGA in the same manner as described in Example 2 to give a urethane-crosslinked type resin, and further an electrocoating composition is prepared therefrom likewise.

Reference Example 1

A mixture of an epi-bis type epoxy resin (epoxy equivalent weight: 490) (980 parts by weight) and methyl isobutyl ketone (297 parts by weight) are kept at 50—60°C, and thereto is added dropwise diethanolamine (210 parts by weight) over a period of 60 minutes, and the mixture is reacted for 60 minutes to give an amino group-containing epoxy resin.

To the resin thus obtained (660 parts by weight) is added dropwise the same semi-blocked tolylene diisocyanate as used in Example 2 (412.4 parts by weight), and the mixture is reacted at 80°C for 2 hours to give a urethane-crosslinked type resin (nonvolatile part: 70%). The liquid resin thus obtained is neutralized with acetic acid with stirring and thereto is added a deionized water (3733.4 parts by weight) to give a homogeneous electrocoating composition (pH 6.0). By using this composition, a homogeneous cationic electrocoating composition is prepared in the same manner as described in Example 2. The composition has a nonvolatile part of 20% and a pigment weight concentration of 20%.

The cationic electrocoating compositions prepared in Examples 2, 3 and 4 and Reference Example 1 were subjected to electrocoating by using a steel plate treated with iron phosphate as a cathode and carbon plate as an anode at 30°C with stirring at 120 V for 3 minutes. After the electrocoating, the coated steel plate was washed with water, and cured at 180°C for 20 minutes to give a cured film having excellent gloss and gray colour. Various properties of the test samples thus obtained were tested. The results are shown in Table 1.

TABLE 1

| | Ex. 2 | Ex. 3 | Ex. 4 | Ref. Ex. 1 |
|---|---|---|---|---|
| Dispersibility of pigment | ◎ | ◎ | ◎ | ◎ |
| Thickness of film (μm) | 20 | 20 | 20 | 20 |
| Smoothness of the coating surface | ◎ | ◎ | ◎ | ◎ |
| Pencil hardness | 4H | 4H | 4H | 4H |
| Erichsen test | 7.0 mm | 7.0 mm | 6.8 mm | 3 mm |
| Erichsen, crosscut, peeling of tape*1 | 100/100 | 100/100 | 100/100 | 2/100 |
| Bending resistance*2 | ◎ | ◎ | ◎ | x |
| Impact resistance*3 | | | | |
| Surface | ◎ | ◎ | ◎ | x |
| Reverse | o | o | o | x |
| Salt spray test*4 | ◎ | ◎ | ◎ | ◎ |

[Remarks]: Evaluation was done as follows:
◎: Excellent
o: Good
x: Bad

*1) The surface of the cured film was crosscut to form 100 squares (1 mm × 1 mm) in the same manner as described in Example 1. The samples were dipped into hot water at 50°C for 500 hours. After removal of the sample films from dipping bath, the wet surfaces of the sample films were wiped softly and air-dried. A cellophane tape was adhered on the surface of the sample film crosscut and was peeled off. The number of squared remained without being peeled off was counted, and the results are shown as the number of remained squared/100 (original number of squares).

*2) The test samples were bent by winding them around a column having a diameter of 2 mm, and the surface was observed.

*3) A load of 500 g was fallen on the test samples (on the coated surface or on the reverse side) from the height of 50 cm at a point of impact of 1,27 cm ($\frac{1}{2}$''), and the degree of damage of the coating film was observed.

*4) A 5% saline (35°C) was sprayed onto the coated surface of the test samples for 1000 hours, and the degree of damage of the coated film was observed.

As is clear from the above test results, it was confirmed that the compositions of Examples 2, 3, and 4 of the present invention showed sufficient flexibility and adhesion and also excellent corrosion resistance.

Example 5

The modified adduct obtained in Example 2 (80 g), an epi-bis type epoxy resin (epoxy equivalent weight: 187) (120 g) and benzyltrimethylammonium chloride (20 mg) are reacted under nitrogen gas at 150°C for 2 hours to give a pale yellow clear modified resin (acid value: 0, epoxy equivalent weight: 370, viscosity at 50°C: 10 Pa.s).

The modified epoxy resin thus obtained (100 parts by weight) and diaminodiphenylmethane (25 parts by weight) are mixed, poured into a fixed mold and then cured under the conditions of 80°C for 2 hours, 120°C for 2 hours, and 160°C for 2 hours in series.

The cured product thus obtained were subjected to Charpy impact test and also to a thermal shock test.

The thermal shock test was carried out as follows: The epoxy resin composition was cured in an aluminium-made cup (diameter: 5 cm, height: 1.5 cm) wherein a bolt-nut washer was contained. The resulting cured product wherein the washer was embedded was taken out, and was subjected, and was subjected to heating-cooling cycle, i.e. repeating of heating at 100°C and then cooling at 0°C for each 30 minutes, and then, the number of the cycle until the sample was cracked was counted.

For comparison purpose, in the same manner as above except than an unmodified epi-bis type epoxy resin (epoxy equivalent weight: 187) was used instead of the modified epoxy resin, a cured test sample was prepared and subjected to the tests, likewise.

The results of the above tests are shown in Table 2.

TABLE 2

| | Modified epoxy resin of the present invention | Unmodified epoxy resin |
|---|---|---|
| Charpy impact test | 8.5 kg·cm/cm$^2$ | 4.5 kg·cm/cm$^2$ |
| Thermal shock test (number of cycle) | More than 10 times | 0 time |

Example 6

A liquid polybutadiene (number average molecular weight: 600, viscosity at 30°C: 50 mPa.s, iodine value: 450, cis-1,4 structure: 31%, trans-1,4 structure: 64%, and 1,2-vinyl structure: 5%) (300 g), phenyl-α-naphthylamine (80 mg) and maleic anhydride (100 g) are charged into a 500 ml four-necked flask, and the mixture is reacted under nitrogen gas at 190°C for 4 hours to give a maleinated polybutadiene (total acid value: 270).

Into a 500 ml four-necked flask are charged the maleinated polybutadiene obtained above (200 g), BHT (1.0 g), allyl alcohol (10.9 g) and benzyldimethylamine (0.1 g), and the mixture is reacted at 90°C for 2 hours, and thereto is added dropwise aniline (30.0 g) through a dropping funnel. The mixture is reacted at 160°C for 3 hours while taking out the by-produced water, by which there is obtained a viscous modified adduct (total amine value: 0, acid value: 44.8, viscosity at 60°C: 4,610 mPa.s. It is confirmed that the acid anhydride groups in the maleinated polybutadiene are converted into semi-ester groups and imido groups by the above analytical data and IR spectrum.

The modified adduct thus obtained (40 g) and an epi-bis type epoxy resin (epoxy equivalent weight: 488) (60 g) are reacted under nitrogen gas at 150°C for 3 hours to give a homogeneous modified epoxy resin being rich in clarity (acid value: 0, epoxy equivalent weight: 1095).

The modified epoxy resin thus obtained was subjected to the following tests.

The modified epoxy resin (10 g), diaminodiphenylmethane (0.46 g) and EGA (30 g) were mixed well and the resulting solution was coated onto a soft steel panel and cured at 180°C for 20 minutes to give a homogeneous clear cured film (pencil hardness: H).

A cured coating film (thickness: 30 µm) was prepared likewise and crosscut in the same manner as described in Example 1, followed by subjecting to the bending test and peeling test of a cellophane tape likewise. As a result, no change of the coating surface and hence, it was confirmed that the coating film showed excellent flexibility and adhesion.

Reference Example 2

Into a 200 ml four-necked flask are charged a liquid polybutadiene containing terminal COOH group (molecular weight: 1450, acid value: 56, 1,2-vinyl bond: 91%) (30 g), an epi-bis type epoxy resin (epoxy equivalent weight: 488) (70 g), EGA (34 g), BHT (0.5 g) and benzyltrimethylammonium chloride (15 mg), and the mixture is reacted under nitrogen gas at 150°C for 3 hours to give a modified epoxy resin [acid value: almost 0, epoxy equivalent weight: 889 (converted as solid material)].

When the modified epoxy resin thus obtained was distilled under reduced pressure to remove the solvent, there was obtained a white opaque resin, by which it was assumed that the polybutadiene component of the resin was not sufficiently compatible with the epoxy resin. Besides, when the modified epoxy resin (10 g) was mixed with diaminophenylmethane (0.43 g), and the resulting mixture was coated onto a soft steel panel and cured at 180°C for 20 minutes, there was obtained an opaque coating film (thickness: 20 µm), from which the inferior compatibility was re-confirmed. Moreover, the surface of the coating film was somewhat shrunk, and when it was crosscut likewise, it showed blush and inferior adhesion by the peeling test of a cellophane tape.

Reference Example 3

The maleinated polybutadiene obtained in Example 1, i.e. 20% by weight maleinated product of a liquid polybutadiene (number average molecular weight: 1680, cis-1,4 structure: 76%) (80 g), toluene (20 g), ethylene glycol monobutyl ether (4.5 g), BHT (0.1 g) and N,N-dimethylbenzylamine (50 mg) are reacted under nitrogen gas at 130°C for 1 hour to give a partially esterified product. The reaction mixture is heated to 70°C and thereto are added gradually N,N-dimethylpropane diamine (12.7 g) and toluene (10 g), and the mixture is stirred at the same temperature for 1 hour. The mixture is heated until the final

temperature becomes 170°C while taking out toluene and by-produced water to give a modified product (acid value: 23.0, total amine value: 72.0) (about 96 g).

The partially esterified-imidated product thus obtained (40 g), an epi-bis type epoxy resin (epoxy equivalent weight: 488) (60 g), EGA (42.8 g) and BHT (0.1 g) are reacted under nitrogen gas at 150°C for several tens of minutes, at when the reaction mixture shows suddenly increased viscosity and finally gives an insoluble gel material. It is assumed that this phenomenon is due to ring-opening and polymerization of the large amounts of epoxy groups which is catalyzed by the aliphatic tertiary amine having strong basicity bonded to the polybutadiene chain via imido bond, with proceeding of the reaction between carboxyl groups and epoxy groups.

From this reference example, it is clear that such diamine which remains a comparatively strong basic aliphatic amine nitrogen in the molecule can not be used as an imidating agent for the modifying process of the present invention wherein a part of the epoxy groups in epoxy resin is modified and the remaining almost epoxy groups are remained in the free form for using them the subsequent reactions.

**Claims for the Contracting States: DE FR GB IT NL**

1. A modified epoxy resin composition, which comprises the reaction product of an epoxy resin and a modified adduct [D] of a conjugated diene polymer or copolymer which has an imido bond and/or amido bond and a semi-ester structure and has an acid value owing to a free carboxyl group of 5 to 100, the modified adduct being obtained by reacting an adduct A of a polymer of a conjugated diene having a number average molecular weight of 300 to 20,000 or a copolymer of the conjugated diene and a vinyl monomer or acetylene with an α,β-unsaturated dicarboxylic acid or its anhydrides, with a compound [B] containing one primary amino group in the molecule and a compound [C] containing a hydroxy group in the molecule, wherein the compound [B] and the compound [C] are used in an amount of 5 to 95% by mole and 95 to 5% by mole, respectively to 1 mole of the α,β-dicarboxylic acid or its anhydride, and the reaction between the epoxy resin and the modified adduct [D] being carried out under an inert gas at a temperature of 50 to 250°C for a period of time of from 30 minutes to 10 hours.

2. A modified epoxy resin composition as claimed in Claim 1 wherein the conjugated diene monomer is butadiene, isoprene, chloroprene or 1,3-pentadiene, and the vinyl monomer is an acrylic acid ester, a methacrylic acid ester, acrylonitrile, styrene, ethylene or propylene.

3. A modified epoxy resin composition as claimed in Claim 1 or Claim 2 wherein the α,β-unsaturated dicarboxylic acid is maleic anhydride, maleic acid, fumaric acid, itaconic acid or citraconic acid.

4. A modified epoxy resin composition as claimed in any one of the preceding claims wherein the compound [B] containing one primary amino group is a compound of the formula:

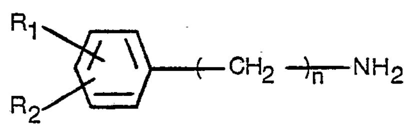

(I)

wherein $R_1$ and $R_2$ are the same or different and are each hydrogen, an alkyl group having 1 to 5 carbon atoms, halogen, cyano, hydroxy, thiol, methoxy, $—CONH_2$, $—COCH_3$, $—COOCH_3$, or $—N(CH_3)_2$, and n is 0 or an integer of 1 to 3.

5. A modified epoxy resin composition as claimed in any one of claims 1 to 3 wherein the compound [B] containing one primary amino group is a compound of the formula:

$$R_3—NH_2 \qquad (II)$$

wherein $R_3$ is an aliphatic hydrocarbon group having 1 to 18 carbon atoms or an alicyclic hydrocarbon group having 3 to 18 carbon atoms, the aliphatic and alicyclic hydrocarbon groups optionally containing an ether bond.

6. A modified epoxy resin composition as claimed in any one of the preceding claims wherein the compound [C] containing a hydroxy group is a compound of the formula:

$$R_4\text{—}(CH_2)_m\text{—}OH \qquad (III)$$

wherein $R_4$ is a saturated or unsaturated hydrocarbon group having 1 to 18 carbon atoms; a saturated or unsaturated hydrocarbon group having 1 to 12 carbon atoms and containing a cyano group, a halogen atom, an ether bond, an ester bond or a hydroxy group which bonds to a secondary or tertiary carbon; a saturated alcohol residue having 1 to 8 carbon atoms; an acrylic acid residue; or a methacrylic acid residue and m is 0 or an integer from 1 to 3.

7. A modified epoxy resin composition as claimed in any one of the preceding claims wherein the epoxy resin contains at least one epoxy group.

8. A modified epoxy resin composition as claimed in any one of the preceding claims wherein the

modified adduct [D] is used in an amount of from 5 to 300 parts by weight to 100 parts by weight of the epoxy resin.

9. A process for producing a modified epoxy resin composition which comprises reacting or mixing an epoxy resin with at least one modified adduct [D] of a conjugated diene polymer or copolymer which has an imido bond and/or amido bond and a semi-ester structure and has an acid value owing to a free carboxyl group of 5 to 100, the modified adduct being obtained by reacting an adduct [A] of a polymer of a conjugated diene having a number average molecular weight of 300 to 20,000 or a copolymer of the conjugated diene and a vinyl monomer or acetylene with an α,β-unsaturated dicarboxylic acid or its anhydride, with a compound [B] containing one primary amino group in the molecule and a compound [C] containing a hydroxy group in the molecule.

**Claims for the Contracting State: AT**

1. A process for producing a modified epoxy resin composition which comprises reacting or mixing an epoxy resin with at least one modified adduct [D] of a conjugated diene polymer or copolymer which has an imido bond and/or amido bond and a semi-ester structure and has an acid value owing to a free carboxyl group of 5 to 100, the modified adduct being obtained by reacting an adduct [A] of a polymer of a conjugated diene having a number molecular weight of 300 to 20,000 or a copolymer of the conjugated diene and a vinyl monomer or acetylene with an α,β-unsaturated dicarboxylic acid or its anhydride, with a compound [B] containing one primary amino group in the molecule and a compound [C] containing a hydroxy group in the molecule, wherein the compound [B] and the compound [C] are used in an amount of 5 to 95% by mole and 95 to 5% by mole, respectively to 1 mole of the α,β-dicarboxylic acid or its anhydride, and the reaction between the epoxy resin and the modified adduct [D] being carried out under an inert gas at a temperature of 50 to 250°C for a period of time of from 30 minutes to 10 hours.

2. A process as claimed in claim 1 wherein the conjugated diene monomer is butadiene, isoprene, chloroprene or 1,3-pentadiene, and the vinyl monomer is an acrylic acid ester, a methacrylic acid ester, acrylonitrile, styrene, ethylene or propylene.

3. A process as claimed in Claim 1 or Claim 2 wherein the α,β-unsaturated dicarboxylic acid is maleic anhydride, maleic acid, fumaric acid, itaconic acid or citraconic acid.

4. A process as claimed in any one of the preceding claims wherein the compound [B] containing one primary amino group is a compound of the formula:

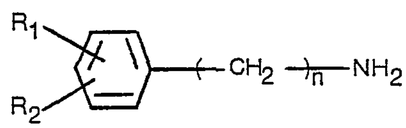

(I)

wherein $R_1$ and $R_2$ are the same or different and are each hydrogen, an alkyl group having 1 to 5 carbon atoms, halogen, cyano, hydroxy, thiol, methoxy, $-CONH_2$, $-COCH_3$, $-COOCH_3$, or $-N(CH_3)_2$, and n is 0 or an integer of 1 to 3.

5. A process as claimed in any one of claims 1 to 3 wherein the compound [B] containing one primary amino group is a compound of the formula:

$$R_3-NH_2 \qquad (II)$$

wherein $R_3$ is an aliphatic hydrocarbon group having 1 to 18 carbon atoms or an alicyclic hydrocarbon group having 3 to 18 carbon atoms, the aliphatic and alicyclic hydrocarbon groups optionally containing an ether bond.

6. A process as claimed in any one of the preceding claims wherein the compound [C] containing a hydroxy group is a compound of the formula:

$$R_4-(CH_2)_m-OH \qquad (III)$$

wherein $R_4$ is a saturated or unsaturated hydrocarbon group having 1 to 18 carbon atoms; a saturated or unsaturated hydrocarbon group having 1 to 12 carbon atoms and containing a cyano group, a halogen atom, an ether bond, an ester bond or a hydroxy group which bonds to a secondary or tertiary carbon; a saturated alcohol residue having 1 to 8 carbon atoms; an acrylic acid residue; or a methacrylic acid residue and m is 0 or an integer of from 1 to 3.

7. A process as claimed in any one of the preceding claims wherien the epoxy resin contains at least one epoxy group.

8. A process as claimed in any one of the preceding claims wherein the modified adduct [D] is used in an amount of from 5 to 300 parts by weight to 100 parts by weight of the epoxy resin.

**Patentansprüche für die Vertragsstaaten: DE FR GB IT NL**

1. Zusammensetzung von modifiziertem Epoxyharz, dadurch gekennzeichnet, daß sie das Reaktionsprodukt eines Epoxyharzes und eines modifizierten Addukts [D] eines konjugierten Dien-Polymerisats oder Copolymerisats, welches eine Imidobindung und/oder Amidobindung und eine Semi-Esterstruktur hat und einen durch eine freie Carboxylgruppe verursachten Säurewert von 5 bis 100 hat, wobei das modifizierte Addukt mittels Umsetzung eines Addukts [A] aus einem Polymerisat eines konjugierten Diens mit einem durchschnittlichen Molekulargewicht von 300 bis 20 000 oder eines Copolymerisats des konjugierten Diens und eines Vinyl-Monomeren oder Acetylen mit einer, α,β-ungesättigten Dicarbonsäure oder ihren Anhydriden, mit einer eine primäre Aminogruppe im Molekül enthaltenden Verbindung [B] und einer eine Hydroxygruppe im Molekül enthaltenden Verbindung [C], wobei die Verbindung [B] und die Verbindung [C] jeweils in einer Menge von 5 bis 95 Mol-% bzw. 95 bis 5 Mol-% auf 1 Mol der α,β-Dicarbonsäure oder ihres Anhydrids verwendet werden, erhalten wird, umfaßt, wobei die Umsetzung zwischen dem Epoxyharz und dem modifizierten Addukt [D] unter einem inerten Gas bei einer Temperatur von 50 bis 250°C während einer Zeitspanne von 30 Minuten bis 10 Stunden durgegeführt wird.

2. Zusammensetzung von modifizierten Epoxyharz nach Anspruch 1, dadurch gekennzeichnet, daß das konjugierte Dien-Monomere Butadien, Isopren, Chloropren oder 1,3-Pentadien ist, und das Vinyl-Monomere ein Acrylsäureester, ein Methacrylsäureester, Acrylnitril, Styrol, Äthylen oder Propylen ist.

3. Zusammensetzung von modifiziertem Epoxyharz nach Anspruch 1 oder Anspruch 2, dadurch gekennzeichnet, daß die α,β-ungesättigte Dicarbonsäure Maleinsäureanhydrid, Maleinsäure, Fumarsäure, Itakonsäure oder Zitrakonsäure ist.

4. Zusammensetzung von modifiziertem Epoxyharz nach irgendeinem der vorhergehenden Ansprüche, dadurch gekennzeichnet, daß die eine primäre Aminogruppe enthaltende Verbindung [B] eine Verbindung der Formel

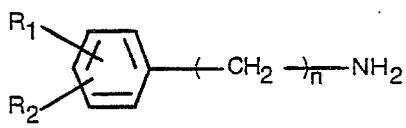 (I)

worin $R_1$ und $R_2$ gleich oder verschieden sind, und jedes Wasserstoff, eine Alkylgruppe mit 1 bis 5 Kohlenstoffatomen, Halogen, Cyan, Hydroxy, Thiol, Methoxy, $—CONH_2$, $—COCH_3$, $—COOCH_3$ oder $—N(CH_3)_2$ darstellt, und n für 0 oder eine ganze Zahl von 1 bis 3 steht, ist.

5. Zusammensetzung von modifiziertem Epoxyharz nach irgendeinem der Ansprüche 1 bis 3, dadurch gekennzeichnet, daß die eine primäre Aminogruppe enthaltende Verbindung [B] eine Verbindung der Formel

$$R_3—NH_2 \quad (II),$$

worin $R_3$ eine aliphatische Kohlenwasserstoffgruppe mit 1 bis 18 Kohlenstoffatomen oder eine alicyklische Kohlenwasserstoffgruppe mit 3 bis 18 Kohlenstoffatomen, wobei die aliphatischen und alicyklischen Kohlenwasserstoffgruppen gewünschtenfalls eine Ätherbindung enthalten, darstellt, ist.

6. Zusammensetzung von modifiziertem Epoxyharz nach irgendeinem der vorhergehenden Ansprüche, dadurch gekennzeichnet, daß die eine Hydroxygruppe enthaltende Verbindung [C] eine Verbindung der Formel

$$R_4\text{—}(CH_2)_m\text{—}OH \quad (III),$$

worin $R_4$ für eine gesättigte oder ungesättigte Kohlenwasserstoffgruppe mit 1 bis 18 Kohlenstoffatomen; eine gesättigte oder ungesättigte, eine Cyanogruppe, ein Halogenatom eine, eine Ätherbindung, eine Esterbindung oder eine an ein sekundäres oder tertiäres Kohlenstoffatom gebundene Hydroxygruppe, enthaltende Kohlenwasserstoff gruppe mit 1 bis 12 Kohlenstoffatomen; einen gesättigten Alkoholrest mit 1 bis 8 Kohlenstoffatomen; einen Acrylsäurerest; oder einen Methacrylsäurerest steht, und m 0 oder eine ganze Zahl von 1 bis 3 ist.

7. Zusammensetzung von modifiziertem Epoxyharz nach irgendeinem der vorhergehenden Ansprüche, dadurch gekennzeichnet, daß das Epoxyharz wenigstens eine Epoxygruppe enthält.

8. Zusammensetzung von modifiziertem Epoxyharz nach irgendeinem der vorhergehenden Ansprüche, dadurch gekennzeichnet, daß das modifizierte Addukt [D] in einer Menge von 5 bis 300 Gewichtsteilen auf 100 Gewichtsteile des Epoxyharzes werwendet wird.

9. Verfahren zur Herstellung einer Zusammensetzung von modifiziertem Epoxyharz, dadurch gekennzeichnet, daß ein Epoxyharz mit wenigstens einem modifizierten Addukt [D] eines konjugierten Dien-Polymerisats oder Copolymerisats, welches eine Imidobindung und/oder Amidobindung und eine Semi-Esterstruktur aufweist und einen von einer freien Carboxylgruppe verursachten Säurewert von 5 bis 100 hat, umgesetzt oder gemischt wird, wobei das modifizierte Addukt mittels Umsetzung eines Addukts [A] aus einem Polymerisat eines konjugierten Diens mit einem durch schnittlichen Molekulargewicht von 300

bis 20 000 oder eines Copolymerisats des konjugierten Diens und eines Vinyl-Monomeren oder Acetylen mit einer α,β-ungesättigten Dicarbonsäure oder ihres Anhydrids mit einer eine primäre Aminogruppe im Molekül enthaltenden Verbindung [B] und einer eine Hydroxygruppe im Molekül enthaltenden Verbindung [C], erhalten wird.

**Patentansprüche für den Vertragsstaat: AT**

1. Verfahren zur Herstellung einer Zusammensetzung von modifiziertem Epoxyharz, dadurch gekennzeichnet, daß ein Epoxyharz mit wenigstens einem modifizierten Addukt [D] aus einem konjugierten Dien-Polymerisat oder Copolymerisat, welches eine Imidobindung und/oder Amidobindung und eine Semi-Esterstruktur aufweist und einen durch eine freie Carboxylgruppe verursachten Säurewert von 5 bis 100 hat, wobei das modifizierte Addukt mittels Umsetzung eines Addukts [A] aus einem Polymerisat eines konjugierten Diens mit einem durchschnittlichen Molekulargewicht von 300 bis 20 000 oder eines Copolymerisats des konjugierten Diens und eines Vinyl-Monomeren oder Acetylen mit einer, α,β-ungesättigten Dicarbonsäure oder ihrem Anhydrid, mit einer eine primäre Aminogruppe im Molekül enthaltenden Verbindung [B] und einer eine Hydroxygruppe im Molekül enthaltenden Verbindung [C], wobei die Verbindung [B] und die Verbindung [C] jeweils in einer Menge von 5 bis 95 Mol-% bzw. 95 bis 5 Mol-% auf 1 Mol der α,β-Dicarbonsäure oder ihres Anhydrids verwendet werden, erhalten wird, umgesetzt oder gemischt wird, wobei die Umsetzung zwischen dem Epoxyharz und dem modifizierten Addukt [D] unter einem inerten Gas bei einer Temperatur von 50 bis 250°C während einer Zeitspanne von 30 Minuten bis 10 Stunden durgegeführt wird.

2. Verfahren nach Anspruch 1, dadurch gekennzeichnet, daß das konjugierte Dien-Monomere Butadien, Isopren, Chloropren oder 1,3-Pentadien ist, und das Vinyl-Monomere ein Acrylsäureester, ein Methacrylsäureester, Acrylnitril, Styrol, Äthylen oder Propylen ist.

3. Verfahren nach Anspruch 1 oder 2, dadurch gekennzeichnet, daß die α,β-ungesättigte Dicarbonsäure Maleinsäureanhydrid, Maleinsäure, Fumarsäure, Itakonsäure oder Zitrakonsäure ist.

4. Verfahren nach irgendeinem der vorhergehenden Ansprüche, dadurch gekennzeichnet, daß die eine primäre Aminogruppe enthaltende Verbindung [B] eine Verbindung der Formel

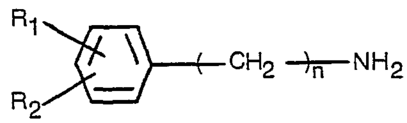

(I)

worin $R_1$ und $R_2$ gleich oder verschieden sind, und jedes Wasserstoff, eine Alkylgruppe mit 1 bis 5 Kohlenstoffatomen, Halogen, Cyan, Hydroxy, Thiol, Methoxy, $-CONH_2$, $-COCH_3$, $-COOCH_3$ oder $-N(CH_3)_2$ darstellt, und n für 0 oder eine ganze Zahl von 1 bis 3 steht, ist.

5. Verfahren nach irgendeinem der Ansprüche 1 bis 3, dadurch gekennzeichnet, daß die eine primäre Aminogruppe enthaltende Verbindung [B] eine Verbindung der Formel

$$R_3-NH_2 \qquad (II),$$

worin $R_3$ eine aliphatische Kohlenwasserstoffgruppe mit 1 bis 18 Kohlenstoffatomen oder eine alicyklische Kohlenwasserstoffgruppe mit 3 bis 18 Kohlenstoffatomen, wobei die aliphatischen und alicyklischen Kohlenwasserstoffgruppen gewünschtenfalls eine Ätherbindung enthalten, darstellt, ist.

6. Verfahren nach irgendeinem der vorhergehenden Ansprüche, dadurch gekennzeichnet, daß die eine Hydroxygruppe enthaltende Verbindung [C] eine Verbindung der Formel

$$R_4-(CH_2)_m-OH \qquad (III),$$

worin $R_4$ für eine gesättigte oder ungesättigte Kohlenwasserstoffgruppe mit 1 bis 18 Kohlenstoffatomen; eine gesättigte oder ungesättigte, eine Cyanogruppe, ein Halogenatom eine, eine Ätherbindung, eine Esterbindung oder eine an ein sekundäres oder tertiäres Kohlenstoffatom gebundene Hydroxygruppe, enthaltende Kohlenwasserstoff gruppe mit 1 bis 12 Kohlenstoffatomen; eine gesättigten Alkoholrest mit 1 bis 8 Kohlenstoffatomen; einen Acrylsäurerest; oder einen Methacrylsäurerest steht, und m 0 oder eine ganze Zahl von 1 bis 3 ist.

7. Verfahren nach irgendeinem der vorhergehenden Ansprüche, dadurch gekennzeichnet, daß das Epoxyharz wenigstens eine Epoxygruppe enthält.

8. Verfahren nach irgendeinem der vorhergehenden Ansprüche, dadurch gekennzeichnet, daß das modifizierte Addukt [D] in einer Menge von 5 bis 300 Gewichtsteilen auf 100 Gewichtsteile des Epoxyharzes werwendet wird.

**Revendications pour les Etats contractants: DE FR GB IT NL**

1. Composition de résine époxyde modifiée, qui comprend le produit de la réaction d'une résine époxyde et d'un produit modifié d'addition [D] d'un polymère ou copolymère de diène conjugué, comportant une liaison imido et/ou une liaison amido et une structure de semi-ester et présentant un indice d'acide, en raison du groupe carboxyle libre, de 5 à 100, le produit modifié d'addition étant obtenu par la réaction d'un produit A d'addition d'un polymère d'un diène conjugué, ayant un poids moléculaire moyen en nombre de 300 à 20 000, ou d'un copolymère du diène conjugué et d'un monomère vinylique ou acétylénique avec un acide dicarboxylique à insaturation en α,β ou son anhydride, avec un composé [B] contenant un groupe amino primaire dans sa molécule et un composé [C] contenant un groupe hydroxyle dans sa molécule, procédé dans lequel on utilise le composé [B] et le composé [C] en une quantité de 5 à 95 mol% et de 95 à 5 mole%, respectivement, pour une mole de l'acide dicarboxylique α,β ou de son anhydride, et l'on effectue la réaction entre la résine époxyde et le produit modifié [D] d'addition en atmosphère de gaz inerte à une température de 50 à 250°C durant une période de 30 min à 10 heures.

2. Composition de résine époxyde modifée telle que revendiquée à la revendication 1, dans laquelle le diène conjugué monomère est le butadiène, l'isoprène, le chloroprène ou le 1,3-pentadiène, et le monomère vinylique est un ester d'acide acrylique, un ester d'acide méthacrylique, l'acrylonitrile, le styrène, l'éthylène ou le propylène.

3. Composition de résine époxyde modifiée telle que revendiquée à la revendication 1 ou à la revendication 2, dans laquelle l'acide dicarboxylique à insaturation en α,β est l'anhydride maléique, l'acide maléique, l'acide fumarique, l'acide itaconique ou l'acide citraconique.

4. Composition de résine époxyde modifiée telle que revendiquée dans l'une quelconque des revendications précédentes, dans laquelle le composé [B], contenant un groupe amino primaire, est un composé de formule:

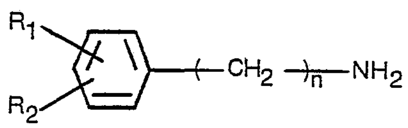

(I)

dans laquelle $R_1$ et $R_2$ sont identiques ou différents et représentent chacun un atome d'hydrogène, un groupe alkyle ayant 1 à 5 atomes de carbone, de l'halogène, un groupe cyano, hydroxyle, thiol, méthoxy, $—CONH_2$, $—COCH_3$, $—COOCH_3$ ou $—N(CH_3)_2$, et n est nul ou est un nombre entier valant 1 à 3.

5. Composition de résine époxyde modifiée telle que revendiquée dans l'une quelconque. des revendications 1 à 3, dans laquelle le composé [B] contenant un groupe amino primaire est un composé de formule:

$$R_3—NH_2 \qquad (II)$$

dans laquelle $R_3$ est un groupe hydrocarboné aliphatique ayant 1 à 18 atomes de carbone ou un groupe hydrocarboné alicyclique ayant 3 à 18 atomes de carbone, les groupes hydrocarbonés aliphatiques et alicycliques contenant éventuellement une liaison éther.

6. Composition de résine époxyde modifiée telle que revendiquée dans l'une quelconque des revendications précédentes, dans laquelle le composé [C] contenant un groupe hydroxyle est un composé de formule:

$$R_4\!-\!(CH_2)_m\!-\!OH \qquad (III)$$

dans laquelle $R_4$ est un groupe hydrocarboné saturé ou insaturé ayant 1 à 18 atomes de carbone; un groupe hydrocarboné saturé ou insaturé ayant 1 à 12 atomes de carbone et contenant un groupe cyano, un atome d'halogène, une liaison éther, une liaison ester ou un groupe hydroxyle relié à un carbone secondaire ou tertiaire; un reste alcool saturé ayant 1 à 8 atomes de carbone; un reste acide acrylique; ou un reste acide méthacrylique; et m est nul ou est un nombre entier valant 1 à 3.

7. Composition de résine époxyde modifiée, telle que revendiquée dans l'une quelconque des revendications précédentes, dans laquelle la résine époxyde contient au moins un groupe époxyde.

8. Composition de résine époxyde modifiée telle que revendiquée dans l'une quelconque des revendications précédentes, dans laquelle on utilise le produit modifié d'addition [D] en une quantité de 5 à 300 parties en poids pour 100 parties en poids de la résine époxyde.

9. Procédé pour produire une composition de résine époxyde modifiée, qui comprend la réaction ou le mélange d'une résine époxyde avec au moins un produit modifié d'addition [D] d'un polymère ou copolymère dfe diène conjugué, ayant une liaison imido et/ou une liaison amido et une structure de semi-ester et ayant un indice d'acide, dû à un groupe carboxyle libre de 5 à 500, le produit modifié d'addition étant obtenu par la réaction d'un produit d'addition [A] d'un polymère d'un diène conjugué, ayant un poids moléculaire moyen en nombre de 300 à 20 000, ou d'un copolymère du diène conjugué, et d'un monomère vinylique ou acétylénique avec un acide dicarboxylique insaturé en α,β ou son anhydride, avec un

composé [B] contenant dans sa molécule un groupe amino primaire et un composé [C] contenant dans sa molécule un groupe hydroxyle.

**Revendications pour l'Etat contractant: AT**

1. Procédé pour produire une composition de résine époxyde modifiée, qui comprend la réaction ou le mélange d'une résine époxyde avec au moins un produit modifié [D] d'addition d'un polymère ou copolymère de diène conjugué, ayant une liaison imido et/ou une liaison amido et une structure de semi-ester et ayant un indice d'acide, dû à un groupe carboxyle libre de 5 à 100, le produit modifié d'addition étant obtenu par la réaction d'un produit d'addition [A] d'un polymère d'un diène conjugué, ayant un poids moléculaire en nombre de 300 à 20 000, ou d'un copolymère du diène conjugué et d'un monomère vinylique ou acétylénique, avec un acide dicarboxylique à insaturé en α,β ou son anhydride, avec un composé [B] contenant dans sa molécule un groupe amino primaire et un composé [C] contenant un groupe hydroxyle dans sa molécule, et l'on utilise le composé [B] et le composé [C] en une quantité de 5 à 95 mol% et de 95 à 5 mole%, respectivement, pour une mole de l'acide dicarboxylique α,β ou de son anhydride, et l'on effectue la réaction entre la résine époxyde et le produit modifié [D] d'addition en opérant sous gaz inerte à une température de 50 à 250°C pendant une période de 30 min à 10 heures.

2. Procédé tel que revendiqué à la revendication 1, dans lequel le diène conjugué monomère est le butadiène, l'isoprène, le chloroprène ou le 1,3-pentadiène, et le monomère vinylique est un ester de l'acide acrylique, un ester de l'acide méthacrylique, l'acrylonitrile, le styrène, l'éthylène ou le propylène.

3. Procédé tel que revendiqué à la revendication 1 ou à la revendication 2, dans lequel l'acide dicarboxylique insaturé en α,β est l'anhydride maléique, l'acide maléique, l'acide fumarique, l'acide itaconique ou l'acide citraconique.

4. Procédé tel que revendiqué dans l'une quelconque des revendications précédentes, dans lequel le composé [B], contenant un groupe amino primaire est un composé de formule:

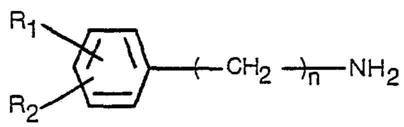

(I)

dans laquelle $R_1$ et $R_2$ sont identiques ou différents et représentent chacun un atome d'hydrogène, un groupe alkyle ayant 1 à 5 atomes de carbone, un atome d'halogène, un groupe cyano, hydroxyle, thiol, méthoxy, $—CONH_2$, $—COCH_3$, $—COOCH_3$ ou $—N(CH_3)_2$, et m est nul ou est un nombre entier valant 1 à 3.

5. Procédé tel que revendiqué dans l'une quelconque des revendications 1 à 3, dans laquelle le composé [B] contenant un groupe amino primaire est un composé de formule:

$$R_3—NH_2 \qquad (II)$$

dans laquelle $R_3$ est un groupe hydrocarboné aliphatique ayant 1 à 18 atomes de carbone ou un groupe hydrocarboné alicyclique ayant 3 à 18 atomes de carbone, les groupes hydrocarbonés aliphatiques et alicycliques contenant éventuellement une liaison éther.

6. Procédé tel que revendiqué dans l'une quelconque des revendications précédentes, dans lequel le composé [C] contenant un groupe hydroxyle est un composé de formule:

$$R_4\text{-}(CH_2)_m\text{-}OH \qquad (III)$$

dans laquelle $R_4$ est un groupe hydrocarboné saturé ou insaturé ayant 1 à 18 atomes de carbone; un groupe hydrocarboné saturé ou insaturé ayant 1 à 12 atomes de carbone et contenant un groupe cyano, un atome d'halogène, une liaison éther, une liaison ester ou un groupe hydroxyle qui se fixe sur un atome de carbone secondaire ou tertiaire; un reste alcool saturé ayant 1 à 8 atomes de carbone; un reste acide acrylique; ou un reste acide méthacrylique; et m est nul ou est un nombre entier valant 1 à 3.

7. Procédé tel que revendiqué dans l'une quelconque des revendications précédentes, dans lequel la résine époxyde contient au moins un groupe époxyde.

8. Procédé tel que revendiqué dans l'une quelconque des revendications précédentes, dans lequel on utilise le produit modifié d'addition [D] en une quantité de 5 à 300 parties en poids pour 100 parties en poids de la résine époxyde.